# EUROPEAN PATENT APPLICATION

(11) **EP 1 557 595 A1**
(43) Date of publication of application: **27.07.2005**
(21) Application number: 03725721.9
(22) Date of filing: 30.04.2003
(51) Int. Cl.: F16J 15/10

(54) **GASKET MATERIAL**

(30) Priority: 05.07.2002 JP 2002196713; 05.07.2002 JP 2002196824
(71) Applicant: Nippon Leakless Industry Co., Ltd., Minato-ku, Tokyo 105-0004 (JP); Honda Giken Kogyo Kabushiki Kaisha, Minato-ku, Tokyo 107-8556 (JP)
(72) Inventor: The designation of the inventor has not yet been filed
(74) Representative: Paget, Hugh Charles Edward
(86) International application number: PCT/JP2003/005548
(87) International publication number: WO 2004/005774

(57) **Abstract**

A gasket material that is manufactured from a joint seat (1) which is made from an ingredient made by mixing and kneading rubber, reinforced fiber and filler, and pressurized laminating and vulcanizing the ingredient by means of calender roll, **characterized in that** at least the outermost layer (1a) of said joint seat that faces said cold roll is formed to have its flexibility and smoothness. According to this invention, the seal efficiency of the gasket which is made from the joint seat (1) under the low surface pressure can improve drastically in comparison with the present gasket.

## Description

### FIELD OF THE INVENTION

The present invention is related to a gasket material which is used for an engine and a transmission for automotive and the like, especially, this gasket material is manufactured from a joint seat, which is made from an ingredient made by mixing and kneading rubber, reinforced fiber and filler, and pressurized laminating and vulcanizing the ingredient by means of calender roll.

### BACKGROUND OF THE INVENTION

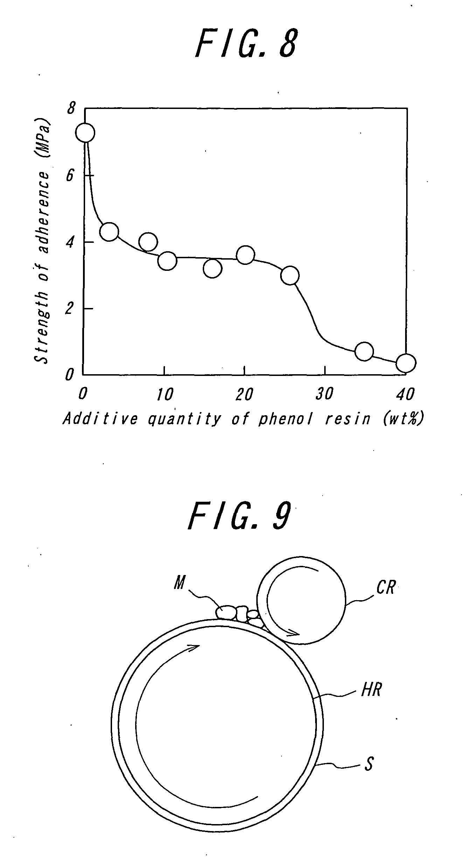

Up to now, so-called asbestos joint seat was used as the material of the gasket for the circumference of the engine carried on the vehicles and so on. This asbestos joint seat was formed from following process; preparing a ingredient M by mixing and kneading a asbestos as a reinforced fiber, nitrile rubber and phenol resin; forming the joint seat by laminating and vulcanizing the ingredient M on the hot roll HR of a calender roll which is comprising a pair of rolls, that is, a hot roll HR and a cold roll CR as shown in Fig. 9.

However, recently, this asbestos joint seat is imposed regal controls because of its influence of environment, so that the applicants of this application are studying a joint seat which uses another fiber materials instead of asbestos, and presents the result of such study as a paper "Development of non-asbestos gasket material" which is contained in a proceedings of a lecture meeting published by Society of Automotive Engineers of Japan, Inc. at May, 1992.

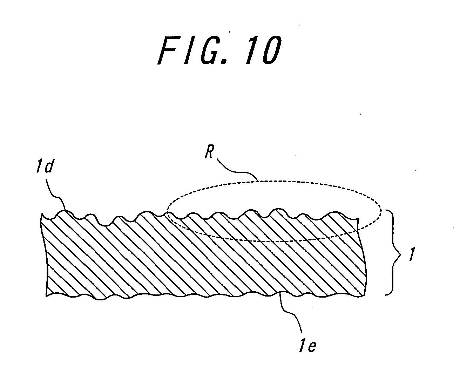

By the way, at a joint seat forming process, a laminated seat S sticking on the hot roll HR always contacts to the cold roll CR with sliding, so that, as shown in Fig. 10, a contact surface 1d of the laminated seat S, as a result of a joint seat 1, opposed to the cold roll CR tends to coarse indicated as a portion R compared with a contact surface 1e of the seat 1 opposed to the hot roll HR.

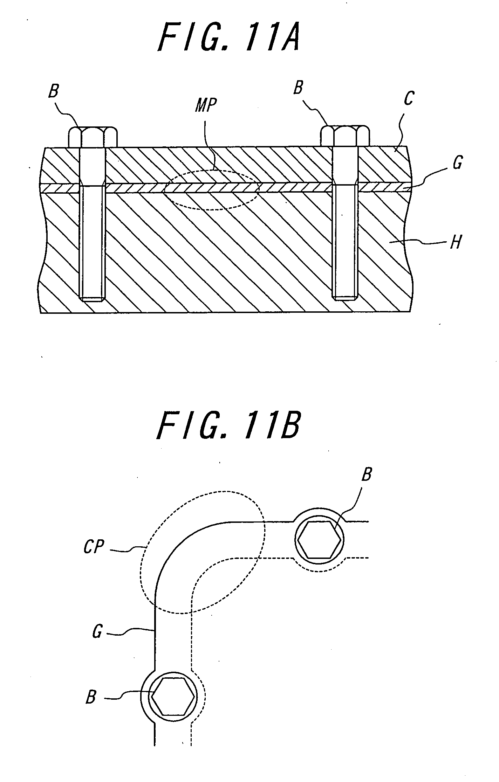

Therefore, as shown in Fig. 11A, when a gasket G which is made from the joint seat 1 is used at a gasket insert portion between a transmission housing H joined with a engine and a cover C connected to the housing H by means of a plural of bolt B, a sealing efficiency of the gasket tends to decrease because of the reducing of the surface pressure which is generated of the portion like a corner portion CP which is offset to a straight line drawn between two bolts B as shown in Fig. 11B, or a portion MP which lies between two bolts B and has low rigidity of cover C as shown in Fig. 11A. In such a portion, if a roughness of the contact surface of a sealing subject like the housing H and the cover C which contacts the gasket G, a problem is generated that burying of micro gap between the contact surface of the sealing subject like the housing H and the cover C and gasket G becomes insufficient, so the sealing effect by the gasket G becomes difficult. And the contact surface 1e of the joint seat 1 opposed to the hot roll HR becomes coarse to some extent caused from the ratio of the reinforced fiber, but such roughness is less than that of the surface 1d opposed to the cold roll CR.

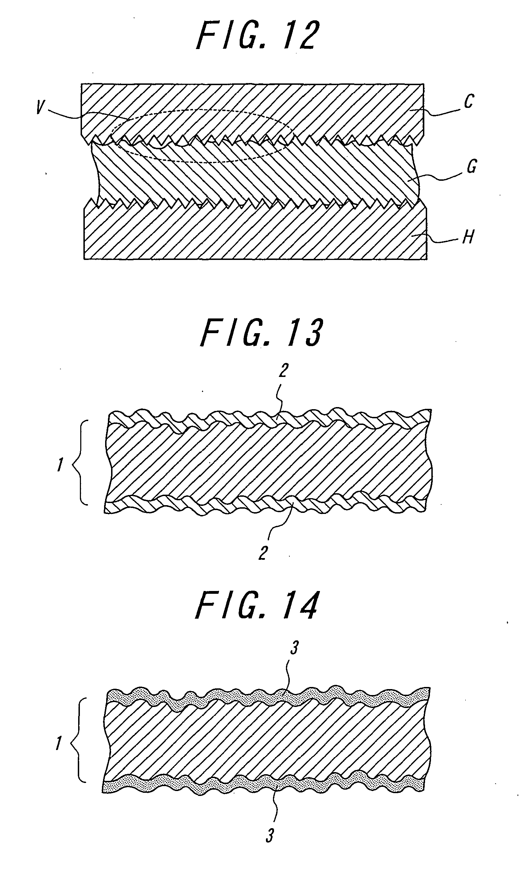

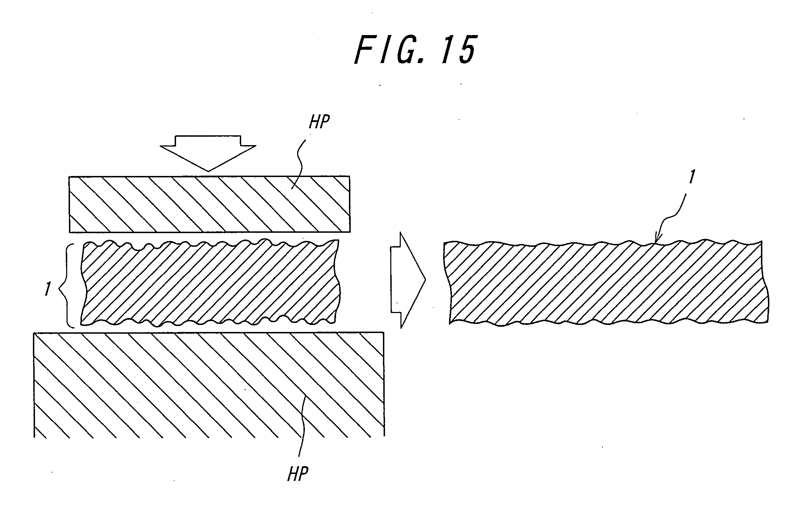

So, to solve such problem of the decline of the sealing effect, the applicant tried the following solutions to improve the sealing effect of the gasket;
1) Latex layer is formed uniformly on the surface of the joint seat 1 by dipping process or roll coater to improve the flexibility of the surface of the seat as shown in Fig. 13;
2) Coating layer of a solid lubricant of graphite powder or molybdenum disulfide powder by means of spraying method and the like is formed on the surface of the joint seat 1 to bury the micro gap as shown in Fig. 14;
3) Heat pressing the joint seat 1 by shut it in hot plate HP or roll press machine to improve the surface flatness as shown in Fig. 15.

However, these solutions has following problems respectively; in the solution 1), the latex layer considerably swells when an automatic transmission fluid (ATF) infiltrated into the layer, so if a gasket G made from a joint seat 1 with the latex layer 2 applied to the gasket insert portion between the transmission housing H and the cover C, deterioration of the latex layer progresses and leakage of ATF is generated by using this gasket in the long time under the high temperature; in the solution 2), electrical erosion is generated in a gasket insert portion by the gasket which depends on the material of the housing H or the cover C or kind of the media to sealing, or the manufacturing cost will high because the solid lubricant is expensive; and in the solution 3), sealing effect at the area of the low surface pressure will drop adversely because of the decrease of the essential compression effect of the joint seat.

As described above, the joint seat is generally manufactured from forms a laminated seat on the hot roll of the calender roll by mixing and rolling the ingredient attached on the hot roll, and breaks away the seat from the chilled the hot roll afterward. Therefore, the ingredient of the joint seat requires the characteristics that it is easy to attach the heated hot roll but difficult to the cold roll, and easy to break away from the chilled hot roll after the forming of the seat.

Therefore, up to now, the joint seat 1 generally composed as a three-layer construction which comprises a front surface layer 1a which is composed as so-called a dish component that is adhered on the hot roll, a back surface layer 1b which is composed as so-called a finished component that is difficult to adhere on the cold roll and, a middle layer 1c which is composed as so-called a middle component which is intervened between the front surface layer and the back surface layer and has a sufficient mechanical strength. There is generally used a natural rubber as a rubber material which is used as the dish component. However, the natural rubber has a characteristic that it has a large permanent compression strain under the heat-suffering environment.

On the other hand, as shown in Figs. 11A and 11B, when the gasket is used at a gasket insert portion between a transmission housing joined with a engine and a cover connected to the housing by means of a plural of bolt B, for example, a surface pressure acts upon the gasket is high directly below the bolt. But the surface pressure is low at the corner portion, which is offset to a straight line drawn between two bolts, or a bolt span portion, which lies between two bolts. So it is well known the difference of the surface pressure is arise. Such the difference of the surface pressure recently tends to increase as the rigidity of the constructive body becomes low with the weight saving of the body. And the low rigidity of the constructive body arises the change of the gap between the seal because of the change of the temperature and the like; such the change brings out the increase of the additional difference of the surface pressure.

Therefore, when the gasket which is formed from the above-mentioned present joint seat 1 at the sealing portion of the structural body that is composed from fastening used by a fastener such as bolt, the fastening force of the bolt is determined under the condition to ensure the sealing effect at the low surface pressure potion. So a high surface pressure acts upon the gasket directly below of the bolt consequently, there exists the problem that the permanent pressure strain of the front surface 1a which the above-mentioned natural rubber used is facilitated and the stress relaxation increases, so the fastening torque of the bolt decreases and it is possible to arise the leakage of the media for sealing.

### DISCLOSURE OF THE INVENTION

The object of this invention is to provide the gasket material to be solved the above-mentioned problems advantageously. The gasket material in the first point of view of this invention that is manufactured from a joint seat which is made from an ingredient made by mixing and kneading rubber, reinforced fiber and filler, and pressurized laminating and vulcanizing the ingredient by means of calender roll, is characterized in that at least the outermost layer of the joint seat that faces the cold roll is formed to have its flexibility and smoothness.

According to the gasket material of this invention, at least the cold roll side of the outermost layer of the joint seat to make the gasket is formed to have its flexibility and smoothness, so the burying of micro gap between the contact surface of the sealing subject and the gasket can achieved sufficiently under the low surface pressure, and can improve the seal efficiency of the gasket.

In the gasket material of this invention, the smoothness of the outermost layer is preferably that the surface roughness Rz (average of 10 points) is less or equal to 20µm. If this Rz is less or equal to 20µm, the seal efficiency will be improved to a large extent as described afterward.

Additionally, the gasket material of this invention, the composition of the outermost layer is preferably composed from that the rate of aramid fiber as the reinforced fiber is under 7wt%, and the rate of rubber is 15wt% - 25wt%. By this composition, the flexibility of the outermost layer can be acquired. In this connection, the surface roughness becomes small as much as there are many rates of the rubber again as much as there are a few rates of the aramid fiber.

Furthermore, in the gasket material of this invention, it is desirable that the thickness of the above outermost layer is 30µm - 150µm. If the layer has such thickness, it can maintain the affection of the stress relaxation caused by permanent compression strain is small with acquiring the flexibility of the layer.

Moreover, the gasket material in the second point of view of this invention that is manufactured from a joint seat which is made from an ingredient made by mixing and kneading rubber, reinforced fiber and filler, and pressurized laminating and vulcanizing the ingredient by means of calender roll, is characterized in that the joint seat has an mono-layer structure and, the fundamental composition of the ingredient materials is that the rate of aramid fiber as the reinforced fiber is over 15wt%, the rate of NBR as the rubber material is 10wt% - 30wt%, the rate of phenol resin as the filler is 2wt% - 26wt%, and the remainder is the inorganic filler.

According to the gasket material of this invention, since the joint seat that composes the gasket material has a mono-layer structure without surface layer of the dish component which uses natural rubber that is a permanent compression strain element at hot rolling process, the leakage of the media for seal such as lubricant or working oil or the like caused from the decrease of the fastening torque of the bolt due to the stress relaxation where the large difference of the surface pressure is existed in the heat-subjected environment such as the peripheral of the engine. Furthermore, the phenol resin as the filler with 2wt% - 26wt% gives the ingredients the moderate adherence for the running hot roll with high temperature and the moderate ability of detachment, so it can be favorable to form the joint seat by means of the calender roll.

Moreover, in the gasket material of this invention, the phenol resin is preferably resol type. It is because this gives the good dispersion of the phenol resin in the ingredient material.

### BRIEF EXPLANATION OF THE DRAWING

Fig. 1 shows a cross sectional view of a joint seat as one embodiment of the gasket material of this invention in above the first point of view.
Fig. 2 shows a enlarged cross sectional view of the gasket that is formed from the above joint seat, and the gasket is under the condition that it was inserted between a housing and a cover of a transmission.
Fig. 3 shows a diagram of the relation of the roughness of the gasket surface and the seal efficiency according to the gasket, which is formed from the joint seat of above embodiment and to the gasket, which is formed from the existing joint seat.
Fig. 4 shows a diagram of the seal efficiency under the low surface pressure of the gasket, which is formed from the joint seat of above embodiment, and of the gasket, which is formed from the existing joint seat.
Fig. 5 shows a diagram of the efficiency of fill the surface roughness of flange with the gasket, which is formed from the joint seat of above embodiment, and with the gasket, which is formed from the existing joint seat.
Fig. 6 shows a cross sectional view of a joint seat as one embodiment of the gasket material of this invention in above the second point of view.
Fig. 7 shows a diagram of the relation of the cool and heat cycle and the holding rate of the axial force of the bolt according to the gasket, which is formed from the joint seat of above embodiment and to the gasket, which is formed from the existing joint seat.
Fig. 8 shows a diagram of the relation of the additive quantity of phenol resin to the ingredient and the strength of the attachment of the ingredient to the hot roll according to the gasket, which is formed from the joint seat of above embodiment, and to the gasket, which is formed from the existing joint seat.
Fig. 9 shows a method of manufacturing of joint seat by calender roll.
Fig. 10 shows a cross sectional view of the condition of the surface of the existing joint seat.
Fig. 11A and Fig. 11B shows a cross sectional view and a plan view of the condition of the gasket which is inserted between a housing and a cover of a transmission.
Fig. 12 shows an enlarged cross sectional view of the condition of the gasket that is made from existing joint seat and that is inserted between a housing and a cover of a transmission.
Fig. 13 shows a cross sectional view of the joint seat with a latex layer as an outermost layer.
Fig. 14 shows a cross sectional view of the joint seat with a solid lubricant coating on its surface.
Fig. 15 shows a method for the improvement of the surface smoothness of the joint seat by heat pressing.

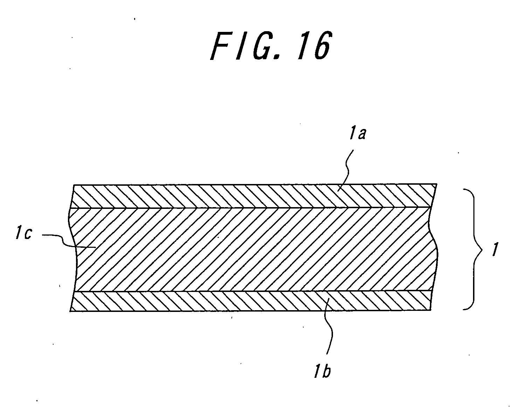

Fig. 16 shows a cross sectional view of the present joint seat.

### THE BEST MODE FOR PRACTICING THE INVENTION

There will be described hereinafter an embodiment according the present invention, with reference to the accompanying drawings.

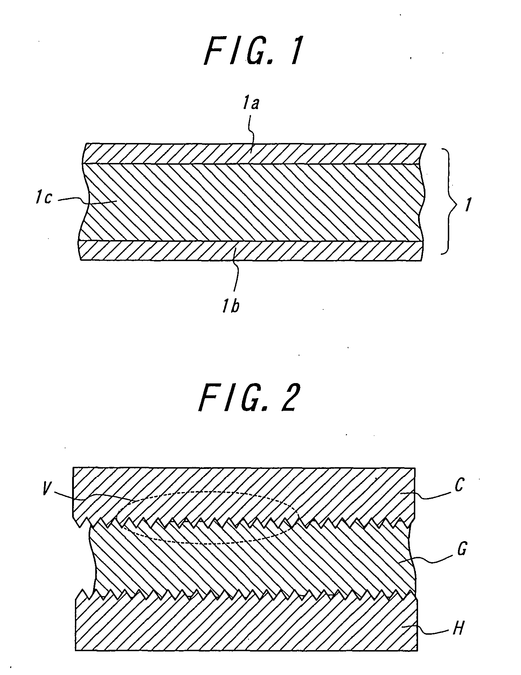

Fig. 1 shows a cross sectional view of one embodiment of the gasket material of this invention in above-mentioned the first point of view, the numeral 1 indicates a joint seat as the gasket material of this embodiment. This joint seat 1 has three-layer construction, that is, a front surface layer 1a and a back surface layer 1b that these layers forms outermost layer respectively, and a middle layer 1c that exists between the front surface and back surface layer. In this embodiment, these surface layer 1a and 1b is formed to have flexibility and smoothness.

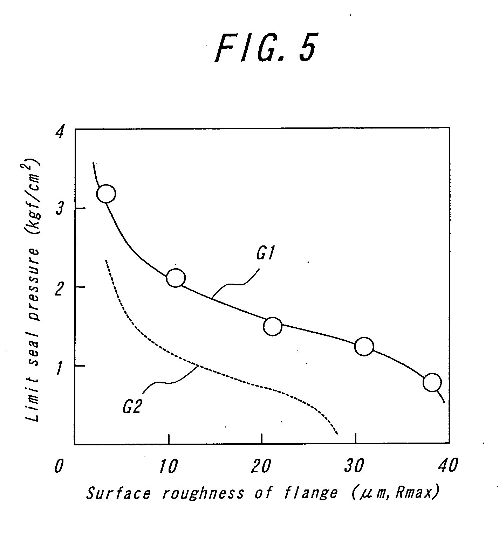

In manufacturing this joint seat 1 of the embodiment, as shown in Fig. 9, at first, a ingredient material M is made by mixing rubber such as NBR (Nitrile-Butadiene-Rubber), aramid fiber as a reinforced fiber and inorganic filler such as barium sulfate, then this ingredient material M feeds on a hot roll HR of a calender roll which comprises a pair of rolls, namely, hot roll HR and cold roll CR, forming a laminated ingredient on the hot roll HR by mixing and pressing with the use of these rolls, furthermore forming a joint seat S by vulcanizing and curing the ingredient with the use of the heat of the hot roll HR, hereinafter the joint seat 1 forms by detaching the seat S from the hot roll HR. In this process, the above-mentioned the front surface layer 1a, the back surface layer 1b and the middle layer 1c of the three layers of the joint seat 1 are formed by mainly varying the composing quantity of the reinforced fiber. As for the more detail of this process, please refer the aforementioned paper "Development of non-asbestos gasket material". In this connection, in page 179 of this paper, Fig. 5 shows an examples of the composition of aramid fiber, glass fiber and NBR of the middle layer, especially, in the percentage of composition that is indicated by point 5, aramid fiber is about 24wt%, glass fiber is about 33wt% and NBR is about 43wt%.

In this embodiment, to make the front surface 1a flexibly and smoothly, the composition of the front surface 1a is configured that the percentage of aramid fiber is less and equal to 7wt% and rubber is 15wt% - 25wt%. And this front surface 1a is formed that its thickness is 30µm - 150µm.

In the joint seat 1 of this embodiment, the front surface layer 1a that is outermost layer of the joint seat 1 which is the cold roll side (the side having a contact surface that attaches to cold roll CR) is formed to be flexibly and smoothly, so like a portion V that is shown in Fig. 2, burying of the micro gap that exists between the cover C as the sealing subject and the gasket G can achieve sufficiently under the low surface pressure, and consequently, the seal efficiency of the gasket can be improved. Furthermore, the back surface layer 1b which is the hot roll side (the side having a contact surface that attaches to hot roll HR) is also formed to be flexibly and smoothly, thus burying of the micro gap that exists between the housing H and the gasket G can achieve sufficiently under the low surface pressure, and consequently, the seal efficiency of the gasket can be improved.

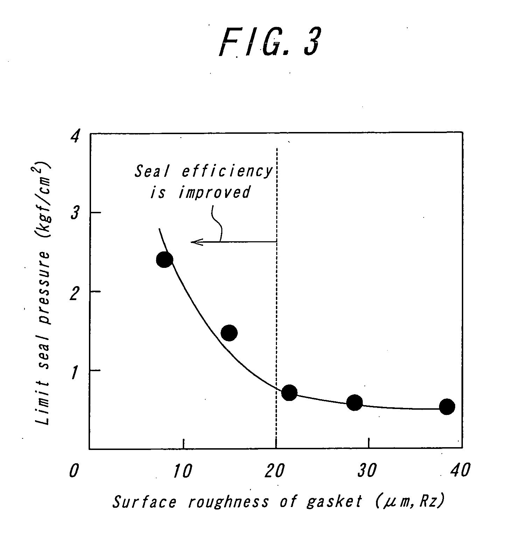

Fig. 3 shows a experimental result of the limit seal pressure of the gasket which made from the joint seat 1 of this embodiment and of the gasket which made from the present joint seat under the condition that a number of these gasket with difference surface roughness made respectively, each gasket is held between two metal flanges, and the surface roughness of the flange: 11.7µm (Rmax, ∇∇), surface pressure of fastening of these flanges: 5MPa, sealing media: air, test temperature: 20°C±5°C. As seen from this graph, the gasket that is made from the joint seat 1 of this embodiment makes the seal efficiency improve drastically.

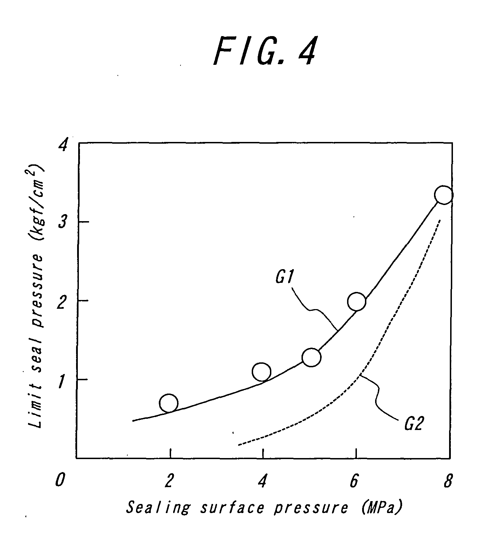

Fig. 4 shows another experimental result of the limit seal pressure of the gasket which made from the joint seat 1 of this embodiment with the surface roughness 14.5µm (indicated by the curve G1 in the graph) and of the gasket as a comparative example which made from the present joint seat with the surface roughness 38.6µm (indicated by the curve G2 in the graph) under the condition that each gasket is held between two metal flanges with the surface roughness of the flange: 11.7µm (Rmax, ∇∇), sealing media: air, test temperature: 20°C±5°C. It is also understood that the gasket that is made from the joint seat 1 of this embodiment has less degree of decrease of seal efficiency under the low surface pressure area as the surface pressure of fastening is less and equal to 6MPa, and has the excellence of the seal efficiency at the low surface pressure area.

Moreover, Fig. 5 shows the other experimental result of the limit seal pressure of the gasket which made from the joint seat 1 of this embodiment with the surface roughness 14.5µm (indicated by the curve G1 in the graph) and of the gasket as a comparative example which made from the present joint seat with the surface roughness 38.6µm (indicated by the curve G2 in the graph) under the condition that each gasket is held between two metal flanges with different surface roughness each other, and surface pressure of fastening of these flanges: 6MPa, sealing media: air, test temperature: 20°C±5°C. It is understood that the gasket that is made from the joint seat 1 of this embodiment has the excellence of the seal efficiency on the rough surface of the sealing subject and has less degree of the seal efficiency although the surface roughness of the flange become worse.

### Example 1

The following Table 1 - Table 8 respectively shows the thickness and surface roughness of 8 kinds of samples of the gasket that are formed from the joint seat 1 of this invention, each joint seat is made by the combination which is selected from the groups that the each of the groups is; the composition of the aramid fiber is 3wt% or 6wt%; the composition of the NBR is 18wt% or 23wt%; the thickness of the surface layer (front surface layer 1a and back surface layer 1b) is 140µm or 75µm (the thickness of one layer).

**(Table 1: Sample 1)**

| | | |
|---|---|---|
| Thickness of gasket | 0.496mm | |
| Surface Roughness (Rz) | 17.2µm | |
| Thickness of surface layer | 75µm | |
| Composition of surface layer of gasket | Aramid fiber | 6% |
| | NBR | 18% |
| | Inorganic fiber | remainder |

**(Table 2: Sample 2)**

| | | |
|---|---|---|
| Thickness of gasket | 0.530mm | |
| Surface Roughness (Rz) | 16.7µm | |
| Thickness of surface layer | 140µm | |
| Composition of surface layer of gasket | Aramid fiber | 6% |
| | NBR | 18% |
| | Inorganic fiber | remainder |

**(Table 3: Sample 3)**

| | | |
|---|---|---|
| Thickness of gasket | 0.497mm | |
| Surface Roughness (Rz) | 16.2µm | |
| Thickness of surface layer | 75µm | |
| Composition of surface layer of gasket | Aramid fiber | 6% |
| | NBR | 23% |
| | Inorganic fiber | remainder |

**(Table 4: Sample 4)**

| | | |
|---|---|---|
| Thickness of gasket | 0.505mm | |
| Surface Roughness (Rz) | 15.6µm | |
| Thickness of surface layer | 140µm | |
| Composition of surface layer of gasket | Aramid fiber | 6% |
| | NBR | 23% |
| | Inorganic fiber | remainder |

**(Table 5: Sample 5)**

| | | |
|---|---|---|
| Thickness of gasket | 0.499mm | |
| Surface Roughness (Rz) | 12.7µm | |
| Thickness of surface layer | 75µm | |
| Composition of surface layer of gasket | Aramid fiber | 3% |
| | NBR | 18% |
| | Inorganic fiber | remainder |

**(Table 6: Sample 6)**

| | | |
|---|---|---|
| Thickness of gasket | 0.501mm | |
| Surface Roughness (Rz) | 12.1µm | |
| Thickness of surface layer | 140µm | |
| Composition of surface layer of gasket | Aramid fiber | 3% |
| | NBR | 18% |
| | Inorganic fiber | remainder |

**(Table 7: Sample 7)**

| | | |
|---|---|---|
| Thickness of gasket | 0.498mm | |
| Surface Roughness (Rz) | 12.0µm | |
| Thickness of surface layer | 75µm | |
| Composition of surface layer of gasket | Aramid fiber | 3% |
| | NBR | 23% |
| | Inorganic fiber | remainder |

**(Table 8: Sample 8)**

| | | |
|---|---|---|
| Thickness of gasket | 0.500mm | |
| Surface Roughness (Rz) | 11.8µm | |
| Thickness of surface layer | 140µm | |
| Composition of surface layer of gasket | Aramid fiber | 3% |
| | NBR | 23% |
| | Inorganic fiber | remainder |

These samples 1 - 8 of the gasket have enough smooth surface that the surface roughness is 17.2µm - 11.8µm, and it was turned out that these samples also have good seal efficiency in the low surface pressure area that the limit seal pressure is 2.7kgf/cm² in all of these samples from the result of the test of the limit seal pressure under the condition that each gasket sample is held between two metal flanges, and the surface roughness of the flange: 23.5µm, surface pressure of fastening of these flanges: 4MPa, sealing media: air, test temperature: 20°C±5°C.

In addition, this invention is not limited by the above-mentioned embodiment, as the other embodiment, for example, the front surface layer 1a of the joint seat 1 may be only formed to be flexibly and smoothly, and this joint seat 1 may be formed to have double-layer structure. Furthermore, as a matter of course, this gasket material of this invention can be used to the gasket except for the gasket that is inserted between the housing H and cover C of a transmission.

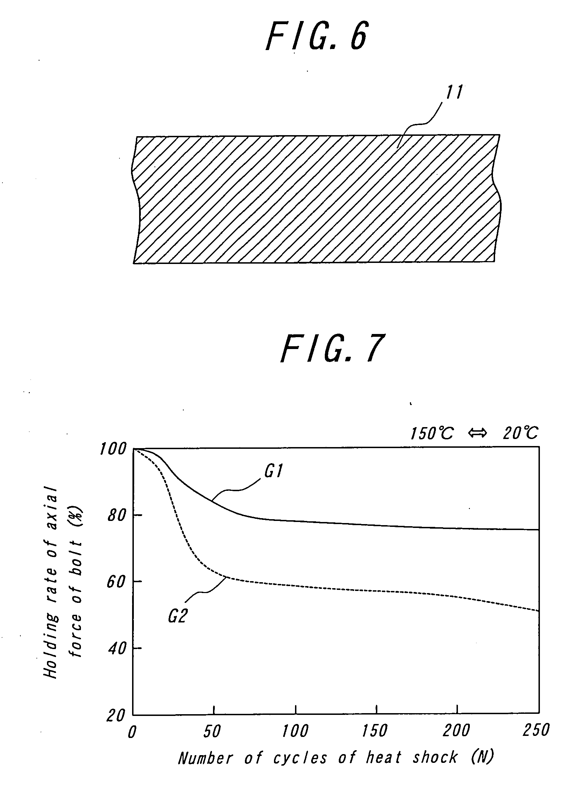

Then, Fig. 6 shows a cross sectional view of another embodiment of the gasket material of this invention in above-mentioned the second point of view, the numeral 11 indicates a joint seat as the gasket material of this embodiment. This joint seat 11 has monolayer construction compositionally.

In manufacturing the joint seat 11 of this embodiment, at first, a ingredient material is made by mixing NBR as a rubber material, aramid fiber as a reinforced fiber and phenol resin and the like as filler, then this ingredient material feeds on a hot roll of a calender roll which comprises a pair of rolls, namely, heated hot roll and chilled cold roll, forming a laminated ingredient on the hot roll by mixing and pressing with the use of these rolls, furthermore forming a laminated seat by vulcanizing and curing the ingredient with the use of the heat of the hot roll, hereinafter the joint seat 11 formed by detaching the seat from the hot roll. As for the more detail of this process, please refer the aforementioned paper "Development of non-asbestos gasket material".

In this embodiment, to make the ingredient have a moderate adherence, the composition of the ingredient is configured that the percentage of aramid fiber is over 15wt% and NBR is 10wt% - 30wt%, phenol resin is more 2wt% - 26wt%, and the remains are inorganic fiber. And the phenol resin is the resol type (for example, product name PR-217 of Sumitomo bakelite Co. Ltd., the weight of the solid content is 100wt%).

Since the joint seat 11 of this embodiment has a mono-layer structure without any surface layer of the dish component which is made from natural rubber that has different composition from the middle component and is a permanent compression strain element in the hot rolling process, according to the joint seat 11 of this embodiment, the leakage of the sealing media such as a lubricant or working oil or the like caused from the decrease of the fastening torque of the bolt due to the stress relaxation where the large difference of the surface pressure is existed in the heat-subjected environment such as the peripheral of the engine. Furthermore, the phenol resin as the filler with 2wt% - 26wt% gives the ingredients the moderate adherence for the running hot roll with high temperature and the moderate ability of detachment, so it is favorable to form the joint seat by means of the calender roll.

Moreover, according to the joint seat 11 of this embodiment, the phenol resin that is used as the ingredient is resol type, so it has a good dispersibility in the ingredient, thus, the above-mentioned action and effect of this invention can be brought perfectly.

Fig. 7 shows an experimental result of the retention of the axial force of bolt of the gasket which made from the joint seat 11 of this embodiment (indicated by the curve G1 in the graph) and of the gasket as a comparative example which made from the present joint seat with three-layer structure (indicated by the curve G2 in the graph) via the experiment of degradation by thermal shock cycle under the condition that each gasket is held between two metal flanges by a bolt, the surface pressure of fastening of these flanges : 150MPa, repeat the heating and cooling between 150°C and 20°C. It will be understood that the gasket formed from the joint seat 11 of this embodiment has a high retention of the axial force of bolt and a small stress relaxation by the permanent compression strain.

### Example 2

The following Table 9 shows the experimental result of the attach efficiency of the ingredient in the making of the joint seat to the hot roll with a high temperature, the samples 9 - 14 are formed from the joint seat 11 of this embodiment, each samples have different composition of aramid fiber, phenol resin and NBR as the rubber material, and the comparative samples 1 - 3 are formed from the joint seat that the composition of phenol resin of the seats are 0wt%, 35wt % and 40wt%, respectively, and these comparative samples thus are out of the range of the embodiment of this invention. This experiment was executed under the condition that the surface pressure: 100MPa, temperature: 100°C and period of time: 60min. And Fig. 8 shows the relation of the strength of attachment and the composition of phenol resin of these samples.

**(Table 9)**

| Examples of composition | Composition (wt%) | | | | Performance of joint seat |
|---|---|---|---|---|---|
| | Aramid fiber | Phenol resin | rubber | Inorganic filler | strength of attachment (MPa) |
| Sample 9 | 20 | 3 | 20 | remainder | 4.2 |
| Sample 10 | 20 | 8 | 25 | remainder | 4.0 |
| Sample 11 | 20 | 10 | 24 | remainder | 3.5 |
| Sample 12 | 20 | 16 | 23 | remainder | 3.2 |
| Sample 13 | 15 | 20 | 27 | remainder | 3.7 |
| Sample 14 | 20 | 26 | 23 | remainder | 3.0 |
| Comparative sample 1 | 15 | 0 | 18 | remainder | 7.5 |
| Comparative sample 2 | 25 | 35 | 20 | remainder | 0.8 |
| Comparative sample 3 | 25 | 40 | 10 | remainder | 0.4 |

From these Table 9 and Fig. 8, it is understood that the ingredient has a moderate strength of attachment when the additive quantity of phenol resin is between 2wt% - 26wt%, and has too large strength of attachment when the quantity is less than 2 wt%, thus it makes difficult to detach the laminated seat from the hot roll, and too small strength of attachment when the quantity is over 26wt%, thus it makes difficult to laminate the ingredient on the hot roll.

Furthermore, with respect to the gaskets that is formed from the joint seat 11 of the above samples, the tensile test was executed under the condition which is defined in JIS K 6251, and buckling fatigue test was executed under the condition that a ring-shaped sample was set between a pair of jigs and one of the jigs was reciprocating slid at the distance of movement 300µm and frequency 1Hz by an actuator with loading a predetermined surface pressure by the hydropress whether the fluff of the fiber generates or not at reciprocating cycle 3000cycle, and the buckling fatigue surface pressure is determined as the surface pressure when the fluff of the sample is generated, and the limit seal pressure test was executed under the condition that the nitrogen gas was supplied to inside the sample which the fluff generated via the jigs and the soap solution was applied to the periphery of the sample to check the leakage of the nitrogen gas, and the limit seal pressure is measured as the gas pressure when the leakage is generated. As a result of these test, these samples of this invention has a high tensile strength over 25MPa, and holds a buckling fatigue surface pressure over 80MPa, and has a limit seal pressure over 2.0kgf/cm².

Moreover, this invention is not limited by the above-mentioned embodiments, for example, the phenol resin may be non-resol type. And the gasket material of this invention of course can be used as the gasket to the periphery of engine instead of the gasket that is inserted between the housing and the cover of the transmission.

### POSSIBILITY OF APPLICATION IN INDUSTRY

According to the gasket material in the first point of view of this invention, the burying of micro gap between the contact surface of the sealing subject and the gasket can achieved sufficiently under the low surface pressure, and can improve the seal efficiency of the gasket.

Moreover, according to the gasket material in the second point of view of this invention, the leakage of the media for seal such as lubricant or working oil or the like caused from the decrease of the fastening torque of the bolt due to the stress relaxation where the large difference of the surface pressure is existed in the heat-subjected environment such as the peripheral of the engine, and it can be favorable to form the joint seat by means of the calender roll.

## Claims

1. A gasket material that is manufactured from a joint seat which is made from an ingredient made by mixing and kneading rubber, reinforced fiber and filler, and pressurized laminating and vulcanizing the ingredient by means of calender roll,
**characterized in that** at least the outermost layer of said joint seat that faces said cold roll is formed to have its flexibility and smoothness.

2. The gasket material according to claim 1,
**characterized in that** the smoothness of said outermost layer is that the surface roughness Rz is less or equal to 20µm.

3. The gasket material according to claim 1 or claim 2,
**characterized in that** the composition of said outermost layer is that the rate of aramid fiber as the reinforced fiber is under 7wt%, and the rate of rubber is 15wt% - 25wt%.

4. The gasket material according to any one of claims 1 - 3,
**characterized in that** the thickness of said outermost layer is 30µm - 150µm.

5. A gasket material that is manufactured from a joint seat which is made from an ingredient made by mixing and kneading rubber, reinforced fiber and filler, and pressurized laminating and vulcanizing the ingredient by means of calender roll,
**characterized in that** said joint seat has an mono-layer structure and, the fundamental composition of the ingredient materials is that the rate of aramid fiber as the reinforced fiber is over 15wt%, the rate of NBR as the rubber material is 10wt% - 30wt%, the rate of phenol resin as the filler is 2wt% - 26wt%, and the remainder is the inorganic filler.

6. The gasket material according to claim 5,
**characterized in that** said phenol resin is resol type.
